# EUROPEAN PATENT APPLICATION

(11) **EP 2 228 636 A2**
(43) Date of publication of application: **15.09.2010**
(21) Application number: 10250448.7
(22) Date of filing: 10.03.2010
(51) Int. Cl.: G01L 19/12

(54) **Pneumatic pressure transducer**

(30) Priority: 13.03.2009 GB 0904335
(71) Applicant: GSSC, Inc., Clearwater, FL 33760 (US)
(72) Inventor: Harper, Alan Roger, Gunnislake, Cornwall PL18 9AT (GB)
(74) Representative: Brown, Michael Stanley

(57) **Abstract**

A sensing system is provided for sensing the pressure of liquid in a vacuum chamber (7).The system includes a pneumatic microswitch (14) having an operating element (15) arranged for movement in response to movement of a diaphragm (10) operated by a change in pressure and a plate means (16) in contact with the diaphragm (10) and with the operating element (15).

## Description

### Field of the Invention

This invention relates to sensing systems, and has for its object the provision of an improved form of pneumatic sensing system.

Catalysed resin is commonly used in the composites industry for low pressure filling of an injection mould which is held together with vacuum. Such a mould has an injection point and at least one vacuum exit point. There is a specific need for providing a means of determining when the mould is filled. The normal procedure is to calculate the amount of resin that will be required, meter the amount of resin being injected and then stop the machine when this predetermined amount has been injected.

This predetermined resin amount cannot be accurately set as slight variables of viscosity due to ambient temperature changes, atmospheric pressure variations and humidity changes are all factors which alter the amount of a specific mould fill capacity.

It is an object of the present invention to provide a more reliable and simpler method of determining when such a mould is completely filled.

Furthermore there is a need to control the flow rate of injecting such moulds in order that the mould is filled at a rate not so great that in-mould resin pressures exceed the vacuum clamping force.

It is a further object of the present invention to provide a pressure sensing system that can be used for this purpose.

The liquids may be volatile and inflammable and it is a more specific object of the present invention to provide a sensing system that can be used in connection with the filling of a mould with a resin that does not include any electrically operated components.

It is an object of the present invention to provide a precision liquid pressure sensing system for use within a sealed vacuum container or mould cavity. The signal of the sensor may be used to provide an alarm and/or automatically stop an injection machine over-filling a mould or control the speed of mould fill subject to in-mould pressure constraints

### Summary of the Invention

According to the present invention there is provided a sensing system for sensing the pressure of liquid in a vacuum chamber, the system including a pneumatic microswitch having an operating element arranged for movement in response to movement of a diaphragm operated by a change in pressure and a plate means in contact with the diaphragm and with the operating element.

The diaphragm is preferably movable between first and second operative positions, with the arrangement such that, when the level of liquid in the chamber increases to a predetermined level, the resultant pressure increase causes the diaphragm to move from its first operative position into its second position.

As applied to the controlling of the filling of a mould with resin, upward movement of the diaphragm preferably causes the microswitch to operate and generate a signal when the pressure increases in response to the resin partially filling the chamber so as to cause the resin injection machine to stop. At this point, the resin pressure will decay and the atmospheric pressure above the diaphragm will cause the diaphragm to be pushed downwardly to release the pressure switch such that the machine will once more be able to start to pump.

Furthermore, as is common to composite injection moulding under vacuum, it is preferable to have a mould cavity vacuum catchpot arrangement to act as a resin trap at the mould final fill point for excess resin from the mould fill, thus guarding against resin entering the vacuum system pipework.

The system of the present invention is accordingly preferably located adjacent to the catchpot to pre-empt the mould filling, i.e. the injection machine will stop before the resin has reached the final fill point, which is the catchpot. However, signalling the machine to stop just prior to the resin reaching the catchpot is an advantage as, if stopped after the resin reaches the catchpot, there is always the possibility of a degree of over-run and thus wastage of resin.

The use of the sensing system of the present invention thus allows moulds to be filled with no prior knowledge of the mould fill capacity as when the resin reaches near to or is art the actual mould final fill point, the sensing system will signal the machine to cancel the injection command and thus stop the machine automatically.

### Brief Description of the Drawing

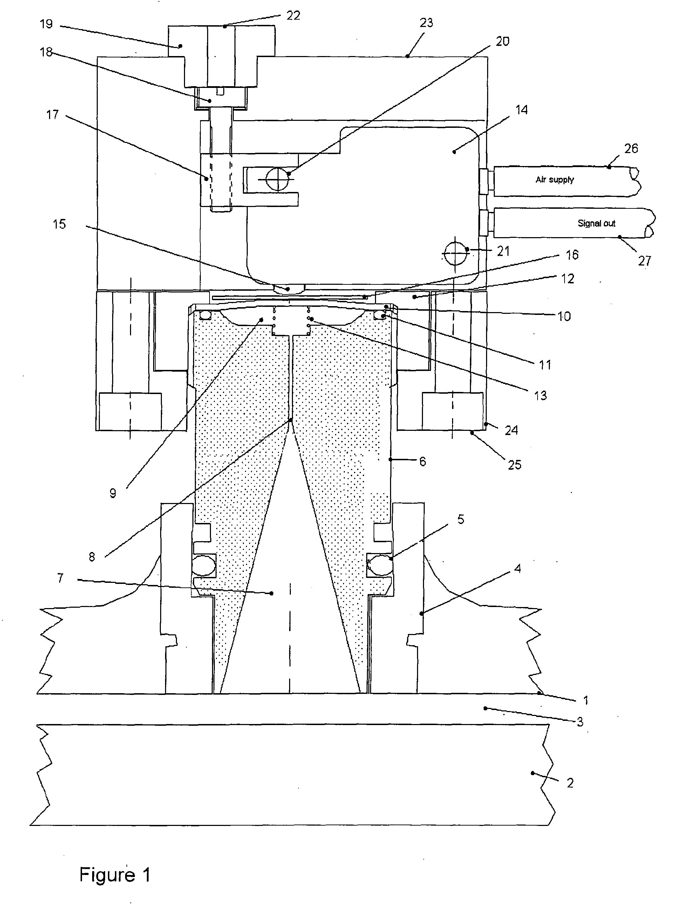

Figure 1 is a cross-sectional view of a sensor mounted on a closed mould cavity for sensing the pressure change of liquid within the sealed vacuum/pressure mould cavity and for generating a signal when the presence of liquid in the mould causes a pressure change of a predetermined value.

### Description of the Preferred Embodiment

The device shown in the drawing includes a closed mould having a cavity 3 between a lower mould face 2 and an upper mould face 1. The upper mould face 1 includes a bonded-in mould insert 4. A sensor main body 6 fits into the insert 4 and has a sealing engagement with the insert 4 by means of a sealing ring 5.

A sensor clamping ring 12 has threaded engagement with the upper portion of the sensor body 6 and the clamping ring 12 is sandwiched between a lower housing member 24 and an upper housing member 23. The sensor body 12, which is preferably made entirely from PTFE material, is formed with a cone-shaped chamber 7 positioned directly over the mould cavity 3. At the top end of the chamber 7, a narrow duct 8 is provided and this leads upwards to and communicates with a second or upper sealed chamber 9. The top of this upper chamber 9 is sealed by a flexible diaphragm 10. The sensor clamping ring 12 serves to seal the diaphragm 10 against the body 6 by clamping pressure exerted upon a sealing ring 11 located in a groove in the upper surface of the sensor body 6.

The lower and upper housing members 24 and 23 are held clamped together by fixing screws 25.

Within the assembled housing formed by housing members 23 and 24 is fixed a micro pneumatic switch 14 with its rear mounting hole 21 acting as a pivot point such that a limited amount of pivotal movement of the switch 14 about the axis of the hole 21 is permitted. The microswitch 14 has an actuator 15 which is positioned centrally relative to the diaphragm 10 with an amplifier plate 16 interposed between the two. As shown in the drawing, the amplifier plate 16 is a rigid flat circular disc.

The position setting of the microswitch actuator 15 is set by adjustment of the position of a yoke 17 which is engaged with a pin 20 projecting from the body of the micro switch 14. The position of the yoke 17 can be adjusted rotation of a screw 18 access to the head of which is obtained via a central access hole 22 of a fitting 19 which is mounted in a recess in the upper housing member 23. When the actuator 15 is operated, this switches the microswitch 14 between its "off" and "on" conditions and the air supply is switched between its "off" and "on" conditions. When the air supply is "on", air flows from an air supply feed pipe 26 to an output signal pipe 27. As shown in the drawing, the feed pipe 26 and the output signal pipe 27 are connected to the body of the microswitch 14.

A compression spring 13 is mounted in the upper chamber 9 and acts on the diaphragm 10 to urge it upwardly, i.e. in a direction such as to move the actuator 15 to its "on" state under normal atmospheric pressure conditions. However, when the pressure within the mould cavity 3, and thus within the chamber 9, falls a predetermined amount below atmospheric pressure, the diaphragm 10 is drawn downwards against the action of the spring 13 such that the actuator 15 is free to move into its "off" condition of switch 14.

In this manner it is possible to set, to a fine degree, the point at which the microswitch 14 actuates between "on" and "off" by the rating of spring 13 and final fine adjustment of the set point level by means of the screw 18.

A mould cavity vacuum catchpot arrangement (not shown) is provided to act as a resin trap at the mould final fill point for excess resin from the mould, guarding against resin entering the vacuum system pipework.

The insert 4 is accordingly located adjacent to the catchpot to pre-empt the mould filling, i.e. the injection machine will stop before the resin has reached the final fill point, which is the catchpot. However, as described above, signalling the machine to stop just prior to the resin reaching the catchpot is an advantage as, if stopped after the resin reaches the catchpot, there is always the possibility of a degree of over-run and thus wastage of resin.

The system shown in the drawing is sufficiently sensitive for it to be able to recognise the presence of resin passing by in a closed mould vacuum infusion/injection process and provide a positive pneumatic signal of this event. It is thus possible to control the injection machine output speed relative to in-mould pressure user setting limits.

The sensing system can be used to determine when the mould has been filled and thus signal the injection machine to stop injecting. The point at which the sensing system switches is, as described above, determined by the rating of spring 13 and by the setting of the range adjustment screw 18.

It has been found that, if the range setting is set to switch at a level just above the cavity pressure when no resin is present, (e.g. a cavity pressure of 500 mb absolute and a switch setting of 550 mb absolute) then the microswitch 14 will be switched on almost immediately once the resin flowing past has covered the conical face of the sensor body 6.

However, if the sensor range is set to a higher range, (e.g. a cavity pressure of 500 mb absolute and a sensor switch setting of 700 mb absolute) then the switch-on point will be later and thus the resin will have flowed a longer distance towards the catchpot, if not right up to the catchpot. It is thus possible to adjust the switch-on point relative to the position at which the user wishes to generate the signal to switch off the machine.

## Claims

**1.** A sensing system for sensing the pressure of liquid in a vacuum chamber, the system including a pneumatic microswitch having an operating element arranged for movement in response to movement of a diaphragm operated by a change in pressure and a plate means in contact with the diaphragm and with the operating element.

**2.** A sensing system as claimed in Claim 1, in which the diaphragm is movable between first and second operative positions, with the arrangement such that, when the level of liquid in the chamber increases to a predetermined level, the resultant pressure increase causes the diaphragm to move from its first operative position into its second position.

**3.** A sensing system as claimed in Claim 1, in which the vacuum chamber is defined at least in part by a conical chamber within a sensor body.

**4.** A sensing system as claimed in Claim 3, in which the sensor body is formed of p.t.f.e.

**5.** A sensing system as claimed in Claim 2, as applied to the controlling of the filling of a mould with resin, in which upward movement of the diaphragm causes the microswitch to operate and generate a signal when the pressure increases in response to the resin partially filling the chamber so as to cause the resin injection machine to stop.

**5.** A sensing system as claimed in Claim 5, in combination with a mould cavity vacuum catchpot arrangement to act as a resin trap at the mould final fill point for excess resin from the mould fill.

**6.** A method of controlling the filling of a mould with resin which includes the use of a sensing system as claimed in Claim 1.
